# EUROPEAN PATENT APPLICATION

(11) **EP 4 819 015 A1**
(43) Date of publication of application: **07.10.2026**
(21) Application number: 25168644.0
(22) Date of filing: 04.04.2025
(51) Int. Cl.: G06Q 20/40

(54) **DETECTING FRAUDULENT ACCOUNTS**

(71) Applicant: Mastercard International Incorporated, Purchase, New York 10577 (US)
(72) Inventor: HALL, James, San Anselmo (US); LOPUCH, Adam, Norwalk (US); CAMPBELL, Brandon, Decatur (US)
(74) Representative: Barker Brettell LLP

(57) **Abstract**

The present invention provides a computer implemented method for detecting fraud using a fraud detection model. The method comprises identifying (501) a transaction from a plurality of transactions occurring over a payment network and receiving (503) details of a source account of the identified transaction. The method further comprises determining (505): a rate at which further transactions occur from the source account, total amount in refunds received by the source account within the predetermined time period, and a total amount in funds sent from the source account, all within a predetermined time period, calculating (509) a feature based on the determined factors and inputting (511), into a fraud detection model, the calculated feature to detect if the source account is associated with fraudulent activity.

## Description

### Field of Invention

The present invention relates to a device and method for detecting fraud using a fraud detection model. In particular, the device and method allow for the determination of data for input into a fraud detection model to predict fraudulent activity.

### Background

There are currently several significant challenges in financial security and fraud detection. Existing systems often fail to accurately tag and track potentially fraudulent activities, particularly those conducted via certain channels such as gambling channels. This often hinders the ability of financial institutions to effectively monitor and mitigate illicit activities. There is also currently an absence in the field of fraud detection for account level detection. Current methodologies primarily focus on transaction-level or financial institution level analysis, which can overlook patterns of behaviour at the account level that may indicate high-risk activity. This lack of account-level analysis can allow more sophisticated fraudulent operations to go undetected.

Furthermore, current detection methodology themselves may experience deficiencies. Traditional systems often rely on static rules or thresholds, which can be easily circumvented by a fraudulent actor changing their tactics and/or or transaction patterns, leading to a high rate of false negatives and allowing illicit activities to continue undetected.

These challenges underscore the need for a more robust and account-focused method for detecting potential fraudulent activities. The proposed invention addresses these issues. providing a significant advancement in the field of financial security.

The present invention sets out to address these challenges and inefficiencies relating to fraud detection.

### Summary

According to the present invention there is provided a computer implemented method for detecting fraud using a fraud detection model, the method comprising: identifying a transaction from a plurality of transactions occurring over a payment network; receiving transaction data related to the identified transaction, wherein the transaction data comprises details of a source account of the identified transaction; determining: a rate at which further transactions occur from the source account within a predetermined time period, a total amount in refunds received by the source account within the predetermined time period, and a total amount in funds sent from the source account within the predetermined time period; calculating a feature based on the rate of further transactions from the source account, the total amount in refunds received by the source account, and the total amount in funds sent from the account; and inputting, into a fraud detection model, the calculated feature so as to detect if the source account is associated with fraudulent activity.

Advantageously, this allows for an improved detection of fraud by inputting a feature into a fraud detection model, where the feature is calculated based on transactional activity of an account involved in an identified transaction. The feature is calculated based on a rate of further transaction occurring from the same account, a total amount refunded, and a total amount spent by the account over a predetermined time period. This allows for an improved input of the feature to be calculated which more accurately indicates whether an account may be fraudulent or not, such that the fraud detection model is able to generate more accurate detections of fraudulent accounts, based on the improved input of the calculated input.

The fraud detection model may be a machine learning model configured to detect fraud. The feature may be an individual measurable property or characteristic of a phenomenon, such as a measurable property or characteristic of the source account of the identified transaction. In this case, the feature may be a numerical value calculated for input into the fraud detection model. The method may comprise calculating a single feature based on the rate of further transactions from the source account, the total amount in refunds received by the source account and the total amount in funds sent from the account. Alternatively, the method may comprise calculating a feature for each of the rate of further transactions from the source account, the total amount in refunds received by the source account and the total amount in funds sent from the account, and inputting into the fraud detection model, each of the three calculated features so as to detect if the source account is associated with fraudulent activity.

Preferably, the step of identifying the transaction from the plurality of transactions may comprise: identifying a transaction from the plurality of transactions that occurred at a merchant with a specific merchant category code (MCC), wherein the specific MCC relates to a category of merchants determined by the payment network to be at risk of being associated with fraudulent activity. In this way, the method filters through the plurality of transactions occurring over the payment network in order to determine only those transactions which occurred at specific types of merchants which have been determined by the payment network to be at risk of being associated with fraudulent activity. This improves the calculated feature input into the fraud detection model, as only features calculated relating to relevant source accounts are used, where the relevant source accounts are those associated with transactions at the set specific types of merchant. For example, the specific MCC may be set to merchants associated with gambling, such that the transaction identified relate to gambling, and accounts engaging in gambling transactions with the merchant can be determined.

Preferably, the step of identifying the transaction from the plurality of transactions may comprise: identifying a transaction from the plurality of transactions that is associated with a predetermined authorization response code received by an acquirer financial institution associated with said transaction from an issuing bank associated with said transaction. In this way, the method filters through the plurality of transactions occurring over the payment network in order to determine only those transactions which received a specific issuer response code. This improves the calculated feature input into the fraud detection model, as only features calculated relating to relevant source accounts are used, where the relevant source accounts are those associated with transactions having specific issuer response codes. The authorization response code is a response code received by the acquirer financial institution indicating a status of the transaction. For example, the set authorization response code may be a response code received by an acquiring financial institution indicating that the transaction has been declined, that an error has occurred in the transaction or that the transaction has been approved.

Preferably, the method may further comprise: determining a total number of safe transactions which occur from the source account within the predetermined time period, wherein the safe transactions comprise transaction occurring between the source account and a merchant associated with a merchant category code (MCC) determined by the payment network not to be at risk of fraudulent activity; calculating a further feature based on the total number of safe transactions; and inputting, into the fraud detection model, the calculated further feature so as to detect if the source account is associated with fraudulent activity. Advantageously, this allows for a number of safe transactions in which the source account is involved in to be determined and used as a further feature for input into the fraud detection model. This improves the input of the fraud detection model, where any safe transactions in which the source account is involved in are also taken into consideration by the fraud detection model in generating a prediction as to whether the source account is associated with fraud.

Preferably, the method may further comprise: determining a total amount in funds sent from the source account to a merchant account within the predetermined time period, wherein a merchant associated with the merchant account is of a specific category determined by the payment network to be at risk of being associated with fraudulent activity; calculating a further feature based on the total amount in funds sent from the source account to the merchant account at risk of being associated with fraudulent activity; and inputting, into the fraud detection model, the calculated further feature to detect if the source account is associated with fraudulent activity. Once the source account is identified from the plurality of transaction, the method further allows for transactional activity of the source account associated with funds being sent to merchants at risk of being fraudulent to be determined. This feature is then used to further improve the prediction made by the fraud detection model as to whether the source account is associated with fraudulent activity. The merchant associated with the merchant account may be determined to be at risk of being associated with fraudulent activity, if it had been previously found by the payment network that the merchant was involved in a previous fraudulent activity.

Alternatively, the method may further comprise determining a total amount in funds sent from the source account to a merchant account of a specific category within the predetermined time period across a plurality of merchant accounts. **In** this case, the feature calculated based on the total amount in funds sent from the source account to the merchant account of the specific category may be calculated as the total amount in funds sent from the source account to all of the plurality of merchant accounts of the specific category.

Preferably, the further feature based on the total number of safe transactions may be a first further feature, the further feature based on the total amount in funds sent from the source account to the merchant account may be a second further feature, and the method may further comprise: calculating a third further feature based on: the rate of further transactions from the source account; the total amount in refunds received by the source account; the total amount in funds sent from the source account; the total number of safe transactions; and the total amount in funds sent from the source account to the merchant account at risk of being associated with fraudulent activity; and inputting, into the fraud detection model, the third further feature so as to detect if the source account is associated with fraudulent activity.

In this way, a feature for input into the fraud detection model is able to be calculated, where the feature is based on the rate of further transactions from the source account, the total amount in refunds received by the source account, the total amount in funds sent from the source account, the total number of safe transactions, and the total amount in funds sent from the source account to the merchant account at risk of being associated with fraudulent activity. This provides an improved feature to be input into the fraud detection model, such that the fraud detection model is able to generate more accurate predictions as to whether the source account is associated with fraudulent activity. The third further feature may be inputted as well as the first and second further features, or alternatively, only the third further features may be inputted, i.e., the third further feature is input instead of the first and second further features.

Preferably, the method may further comprise: determining a total number of cross-border transactions which occur from the source account within the predetermined time period; calculating a further feature based on the total number of cross-border transactions; and inputting, into the fraud detection model, the calculated further feature to detect if the source account is associated with fraudulent activity. In this way, a feature for input into the fraud detection model is able to be calculated, where the feature is based on the a total number of cross-border transactions which occur from the source account. This allows for improved feature to be input into the fraud detection model, such that the fraud detection model is able to generate more accurate predictions as to whether the source account is associated with fraudulent activity.

Preferably, the fraud detection model may be a random forest machine learning model. Alternatively, the fraud detection model may be a clustering machine learning model, a semi-supervised label propagation algorithm, a supervised machine learning model or an anomaly detection algorithm.

Preferably, the specific MCC may be a gambling MCC. The merchant may be a gambling merchant, and as such has a gambling MCC.

Preferably, the method may further comprise: generating, by the fraud detection model after input of the calculated feature, an output, wherein the output indicates a likelihood that the source account is associated with fraudulent activity. Advantageously, this allows for the fraud detection model to be used to generate an output, after inputting the feature relating to the transaction data of the source account, as to whether the account is associated with fraudulent activity.

Preferably, the output may be a fraud risk score that indicates the likelihood that the source account is associated with fraudulent activity. Advantageously, this allows for an accurate risk score to be generated by the fraud detection model that indicates whether the source account is associated with fraudulent activity, based on the improved input data comprising the calculated feature.

Preferably, the method may further comprise: determining if the fraud risk score is above a predetermined threshold; and if the fraud risk score is above the predetermined threshold, sending, to a device, an alert indicating that the source account is associated with fraudulent activity. In this way it is determined whether the fraud risk score sufficiently indicates if the source account is fraudulent or not. This ensures accuracy of the method in determining whether the source account is associated with fraudulent activity, as an alert is only sent relating to those accounts with a fraud score above the threshold. The device may be a user device. The device may be external to a server performing the above method steps. The fraud risks core may be sent to the device to be displayed to a user of the device. Alternatively, the risk score may be sent directly to an external server for automatic rectification or automatic action performed by said server.

According to a further aspect of the present invention, there is provided a device for determining if a merchant account is associated with fraudulent activity, the device comprising a processor and a memory, the memory comprising instructions which, when executed, cause the processor to perform the method of: identifying a transaction from a plurality of transactions occurring over a payment network; receiving transaction data related to the identified transaction, wherein the transaction data comprises details of a source account of the identified transaction; determining: a rate at which further transactions occur from the source account within a predetermined time period, a total amount in refunds received by the source account within the predetermined time period, and a total amount in funds sent from the source account within the predetermined time period; calculating a feature based on the rate of further transactions from the source account, the total amount in refunds received by the source account, and the total amount in funds sent from the account; and inputting, into a fraud detection model, the calculated feature so as to detect if the source account is associated with fraudulent activity.

The device may be a fraud detection server comprising a processor and a memory, the memory comprising instructions which, when executed, cause the processor to perform the method of claim 1 or any claim dependent thereon.

According to a further aspect of the present invention, there is provided a non-transitory computer-readable medium comprising instructions which, when executed by a computer, cause the computer to carry out the method of: identifying a transaction from a plurality of transactions occurring over a payment network; receiving transaction data related to the identified transaction, wherein the transaction data comprises details of a source account of the identified transaction; determining: a rate at which further transactions occur from the source account within a predetermined time period, a total amount in refunds received by the source account within the predetermined time period, and a total amount in funds sent from the source account within the predetermined time period; calculating a feature based on the rate of further transactions from the source account, the total amount in refunds received by the source account, and the total amount in funds sent from the account; and inputting, into a fraud detection model, the calculated feature so as to detect if the source account is associated with fraudulent activity.

### Brief Description of Figures

Figure 1 shows a schematic diagram of a system 100 for determining if an account is associated with fraudulent activity, in accordance with the present disclosure;
Figure 2 shows a schematic diagram of a fraud detection server used within the system shown in Figure 1, for determining a set of transactions 220 that may be associated with fraudulent activity from an input set of transactions 210;
Figure 3 shows a schematic diagram of the fraud detection server shown in Figure 2 using a fraud risk score machine learning model to detect, and alert, whether an account is associated with fraudulent activity;
Figure 4 shows a sequence flow diagram of a method performed by the fraud detection server of Figures 2 and 3, to detect whether an account associated is associated with fraudulent activity;
Figure 5 shows method steps of a computer implemented method for determining if a merchant account is associated with fraudulent activity; and
Figure 6 shows a data processing device, according to the present disclosure.

### Detailed Description

The present invention relates to a method and device for detecting fraud using a fraud detection model. The device is configured to perform a method to determine data relating to the transaction history of an account, input said data into a fraud risk score model and generate a fraud risk score for the account.

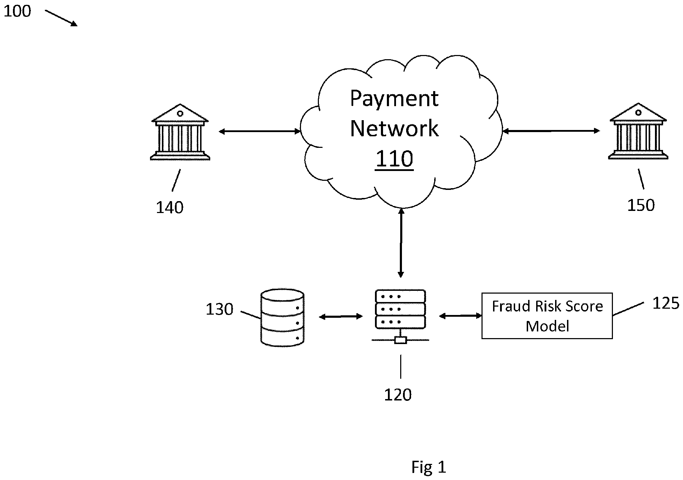

Figure 1 shows a schematic diagram of a system 100 for detecting fraud using a fraud detection model, in accordance with the present invention. The system 100 includes a payment network 110. The payment network 110 is maintained by a payment network provider. Alternatively, the payment network 110 may be maintained by another entity, external to the payment network provider. The payment network provider may be any payment network provider such as Mastercard^{®}, for instance. However, it would be understood that the system 100 is applicable with any type of payment network provider.

The system 100 includes a fraud detection server 120. The fraud detection server 120 is maintained by the payment network provider that maintains the payment network 100. Alternatively, the fraud detection server 120 may be maintained by a different entity to the payment network provider.

As shown in Figure 1, the fraud detection server 120 maintains a fraud risk score model 125. The fraud risks score model 125 is a machine learning model trained and used by the payment network provider to detect fraud occurring over the payment network 110.

The fraud detection server 120 further maintains a database 130. The database 130 stores transaction data relating to transactions that have occurred across the payment network 110, as well as any other data relating to transactions and the payment network 110 that is relevant for the fraud detection server 120 to detect fraud.

The payment network 110 connects entities engaging in financial transactions. The entities connected through the payment network 110 include financial institutions which each maintain accounts holding monetary funds. The system 100 includes one or more acquirer financial institutions 140, and one or more issuer financial institutions 150. The acquirer 140 and issuer 150 financial institutions include entities such as banks, credit unions, cryptocurrency providers and any other entity engaging in a financial transaction.

The payment network 110 is used by the entities to engage in financial transactions, where funds are sent from one account to another account via the payment network 110. The payment network 110 may be a credit card network, an electronic-funds-transfer network, a peer-to-peer payment network or ATM networks. However, it would be understood that the system 100 is applicable with any type of payment network 110.

During a transaction with funds that occurs over the payment network 110, the acquirer financial institutions 140 will receive the funds and the issuer financial institution 150 will issue the funds. For example, a customer may purchase goods from a merchant, and funds will issue from an issuer financial institution 150 associated with an account of the customer and be received by an acquirer financial instruction 140 for depositing into an account associated with the merchant. Through monitoring transactions that occur across the network payment 110, such as the example above, the payment network provider is able to obtain data relating to the transactions.

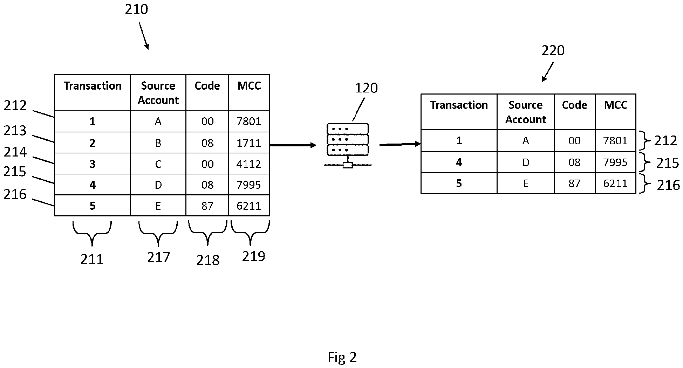

Figure 2 shows a schematic diagram of a fraud detection server used within the system shown in Figure 1, for determining a transaction that may be associated with fraudulent activity. Transaction data 210 is received at the fraud detection server 120 from the payment network 110. The transaction data 210 includes data relating to a plurality of transactions 211 that have occurred between financial institutions 140, 150 via the payment network 110. Each of the plurality of transactions 211 has occurred between a customer account, as the source of the funds, and a merchant account, which is receiving the funds. This may be, for example, as a customer associated with the customer account has purchased goods or services at a merchant associated with the merchant account.

As shown in Figure 2, the plurality of transactions 211 includes transaction 212 denoted as transaction 1, transaction 213 denoted as transaction 2, transaction 214 denoted as transaction 3, transaction 215 denoted as transaction 4, and transaction 216 denoted as transaction 5.

The transaction data 210 includes details of source accounts 217 involved in each of the plurality of transactions 211. The source account of each of the plurality of transactions 211 is the account in which funds were transferred from, during the transaction. For example, as shown in Figure 2, transaction 212 has a source account denoted as A.

The transaction data 210 includes an authorization response code 218 for each transaction 211. The authorization response code is a response code received by an acquiring financial institution 140 from an issuing financial institution 150, in response to a transaction occurring from an account maintained by the issuing financial institution 150, such as a customer account, to an account maintained by the acquiring financial institution 140, such as a merchant account.

Each different authorization response code is a universally known code which indicates a status of the transaction. For example, the authorisation response codes 218 may include any of: '00' which indicates the transaction is approved and has been completed successfully, '01' indicates that the transaction was refused by the issuer, '02' indicates that the customer's card issuer has indicated there is a problem with the card number, '03' indicates that the merchant details are incorrect that a merchant facility is non-functional, '04'indictes that the transaction was declined by the issuing bank that requested for retaining the card as it could be reported as lost or stolen, '05' indicates the issuing bank was unwilling to accept the transaction, '06' indicates there was an error during the card transaction, and '07' indicates that the card issuer requests to retain the card, due to a suspected counterfeit or stolen card for example. The plurality of authorization response codes 218 may include any response codes and are not limited to the above examples.

The transaction data 210 further includes a merchant category code (MCC) 219 for each of the plurality of transactions 211. The MCC of each transaction is a code that indicates a category of the merchant involved in the transaction, where the merchant of each transaction is the entity associated with the account receiving the funds. The MCCs 219 may include any known MCC, such as those shown in Figure 2.

Once the transaction data 210 is received, the fraud detection server 120 proceeds to filter through the plurality of transactions 211 in order to determine any potentially fraudulent transactions. To determine which transactions from the plurality of transactions 211 are at risk of being associated with fraudulent activity, the fraud detection server determines transactions that are associated with a specific set of MMCs and authorization response codes.

The fraud detection server 120 determines which of the transactions 211 have one of a set of specific MCCs that are determined to likely be associated with fraudulent activity. The set of likely fraudulent MCCs in which the received plurality of transactions 211 are to be filtered by are determined by the payment network. However, the specific MCCs may be determined by another entity such as the fraud detection server 120 itself.

The specific MCCs used by the fraud detection server 120 to filter through the received transaction data 210 are '6211', "7801" and '7995'. An MCC of '6211' indicates that the merchant in which the transaction was conducted at is within a category of merchants relating to securities-brokers and dealers, an MCC of '7801' indicates that the merchant in which the transaction was conducted at is within a category of merchants relating to government-licensed casinos (online or internet gambling), and an MCC of '7801' indicates that the merchant in which the transaction was conducted at is within a category of merchants relating to gambling transactions and betting (such as sportsbook, fantasy, social gaming; when regulated and not covered by other MCCs).

The fraud detection server 120 determines which of the transactions 211 have one of a set of predetermined authorisation response codes. The predetermined response codes used to filter through the transaction data 210 are '00', '08', '10', '87', '85'.

The fraud detection server 120 also determines which transactions are considered high-risk by the payment network 110, such as transactions having an acquiring or issuing financial institution in a location considered by the payment network provider to be a high-risk , as well as transactions that over a predetermined value, such as transactions over $1000. The location considered by the payment network provider to be high-risk, may be a high-risk country or a location within a high-risk country.

The fraud detection server 120 therefore identifies a set of transactions 220 from within the received transaction data 210 that are associated with an MCC from within the set of specific MCCs and have one of the set of predetermined authorisation response codes. As per the example shown in Figure 2, this corresponds to the transactions denoted as 1, 4 and 5, and labelled as the transactions 212, 215, and 216 respectively.

The fraud detection server 120 also identifies transactions from the received transaction data 210 that are of a value above the predetermined amount, and transactions that are made at a high-risk location. The transactions identified as being received at a high-risk location may be the same or different to the transactions to those identified based on having a value over the predetermined amount. Either of the transaction identified as being associated with an MCC from within the set of specific MCCs and have one of the set of predetermined authorisation response codes, may be the same or different transactions to those either identified as being above the predetermined amount or those identified as being made at a high-risk location.

The fraud detection server 120 stores details of the identified transactions 220 in the database 130. The details stored in the database 130 include details of the source account of each of the identified transactions 220. In this way, the fraud detection server 120 has determined the transactions 220 that are at risk of being associated with fraudulent activity.

The fraud detection server 120 may also analyse time-series aggregations of transactions occurring from a plurality of accounts across the payment network to determine details of the source accounts that may be at risk of fraudulent activity. All transactions occurring from a plurality of accounts over a given period for certain for a set of MCC groups are monitored by the fraud detection server 120. For each individual source account transaction patterns are identified over time, and each source account is provided with a risk score at the time of a transaction. In this way, the fraud detection server 120 may identify details of the source account at risk of being associated with fraudulent activity.

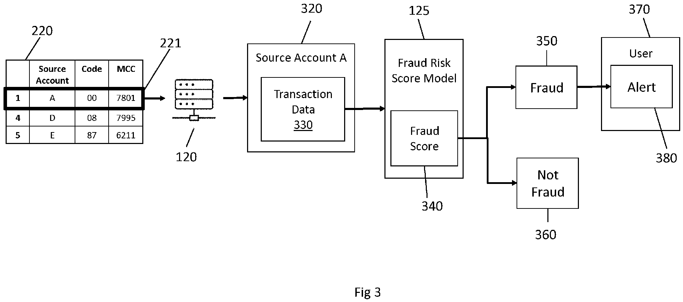

Figure 3 shows a schematic diagram of the fraud detection server shown in Figure 2 using a risk score machine learning model to detect whether an account is associated with fraudulent activity.

The fraud detection server 120 retrieves the stored transactions 220 from the database 130 (not shown in Figure 3). Figure 3 shows the same identified transactions 220 as shown in Figure 2. By way of example, the following description will be based on one of the identified transactions 220, the transaction 212. Therefore, as shown in Figure 3, the transaction 212 is identified by the fraud detection server 120 as being at risk of being associated with fraudulent activity. However, any one of the transactions 220 identified as being at risk of fraudulent activity can be used instead of the transaction 212.

The fraud detection server 120 determines from the stored information regarding the identified transactions 220 in the database 130, details of the source account A of the transaction 212, labelled as account 320 in Figure 3. The details of the source account 320 received by the payment network 110 stored in the database 130 includes an account number of the account 320.

The fraud detection server 120 determines a plurality of different features relating to the identified account 320, which are to be inputted into the fraud risk score model 125. The fraud risk score model 125 is a supervised machine learning model trained to detect the risk of a customer account associated with a potentially fraudulent transaction, i.e., transaction 211, being associated with fraudulent activity. The fraud risk score model 125 may be any supervised machine learning model, such as a random forest model.

The fraud detection server 120 determines a rate at which further transactions occur from the identified account 320 within a predetermined time period, herein referred to as transaction velocity. The predetermined time period may be, for example, 6 hours, 1 day, 7 days, 14 days, 28 days, or any other period of time set by the fraud detection server 120. The rate at which further trasnactions occur from the identified account 320 is an average rate of transactions occurring from the identified account 320 over the predetermined time period. For example, the rate may be the average number of transactions occurring from the identified account 320 per hour across a 1-day period.

The further transaction are identified based on whether they are considered high risk by the payment network provider. A high-risk transaction may be, for example, a gambling transaction, an ATM transaction, a cross-border transaction, or any other type of transaction considered by the payment network provider to be high-risk.

The fraud detection server 120 determines a total amount in refunds received by the account 320 within the predetermined time period. The fraud detection server 120 also determines a total amount in funds sent from the account 320 to any other account within the predetermined time period.

A feature is then calculated by the fraud detection server 120 to input into the fraud risk score model 125. The feature is calculated based on the determined rate of further transaction occurring from the account 320, the total amount in refunds received by the account 320 and the total amount in funds sent from the account 320. For example, the feature may be calculated based on the above parameters by adding or multiplying the values together. Alternatively, each of the above determined parameters relating to the account 320 may be input into the fraud risk score model 125 as separate individual features.

The fraud detection server 120 determines a further feature based on the transactional activity of the account 320, using the following equations. A rate of further high-risk transactions occurring from the account 320 (i.e., the ***'approved high risk 56d velocity'*** feature), and a rate of all transactions occurring from the account 320 to any other account (the ***'approved usd 56d velocity'*** feature) are both calculated within a set time period. The set time period is 56 days. The following equation is then applied by the fraud detection server 120 to determine a 56-day ratio of the above transaction velocities: $56 d ratio = {\left(\frac{approved high risk 56 d velocity + 1}{approved usd 56 d velocity + 1}\right)}^{2}$

The fraud detection server 120 further applies a weight to the above calculated 56-day ratio before combining it with other high-risk factors to produce an overall ***'risk_{usd}'*** feature. The other high-risk factors include any one or combination of suspicious cross border ATM activity, financial instrument exploitation, cash disbursements and insurance sales, account to account direct fund transfer schemes, unique item/collectibles typology (such as a single item purchased at a high-value) and refund schemes.

Additionally, the fraud detection server 120 calculates a ***'safe_{usd}'*** feature. This feature is calculated by determining a number of transactions that occur from the account 320 at merchants with merchant category codes (MCCs) identified by the payment network provider as being safe merchants, not associated with fraudulent activity. For example, the safe MCCs may be:
'4011','4111','4112','4784','4119','4121','4131','4214','4215','4411','4457','4468',' 4511','4582','4722','4789','4812','4813','4814','4816','4821','4899','4900','8011',' 8021','8031','8041','8042','8043','8049','8071','8099','8050','8062','8211','8220',' 8241','8244','8249','8299','8351', between '3000' and '3999' or between '9000' and '9999'.

The fraud detection server 120 calculates a ***'refund'*** feature, by determining a total amount in refunds received by the account 320 over the 56 day period. Based on this ***'refund'*** feature, and the rate of all transactions occurring from the account 320, the fraud detection server 120 calculates a ***'usd'*** feature as shown in the following equation: $usd = approved usd 56 d velocity + \left(2 X refunds\right)$

Based on the ***'usd',*** the ***'refund',*** the ***'safe_{usd}'*** and the ***'risk_{usd}'*** features, the fraud detection server 120 is able to calculate a ***'remainder'*** feature, as shown in the following equation: $remainder = - 0.2 X \left(usd-{safe}_{usd}-\left({risk}_{usd}+refund\right)\right)$

The fraud detection server 120 proceeds to calculates an ***'all comps'*** feature, as shown in the following equation: $all comps = refund + unweig h ted velocities for all typologies + \left(0.2 X remainder\right)$

The ***'unweighted velocities for all typologies'*** feature is calculated by determining a rate of further transactions that occur with a merchant of each MCC, including those identified by the payment network as either safe or associated with fraudulent activity. Once the fraud detection server 120 has calculated the ***'all comps'*** feature, it proceeds to calculate the further feature based on all of the above features relating to the transactional activity of the account 320. The fraud detection server determines a ***'cmp mcc g5'*** feature 330 based on the below equation: $cmp mmc g 5 = \frac{approved high risk 56 d velocity}{all comps}$

The ***'approved high risk 56d velocity'*** is the same feature that is used in the first equation calculating the '**56*d ratio'*** value shown above, which is the rate of further high-risk transactions occurring from the account 320.

The ***'cmp mmc g5'*** feature 330 is then compared to other calculations made by the fraud detection server relating to other types of fraudulent activities, such as money laundering activities. The ***'cmp mmc g5'*** feature 330 is then stored in in the database 130 and is assigned a fraudulent risk reason code. The fraudulent risk reason code indicates that customer account 320 may be fraudulent as it has been associated with high-risk transactions, such as gambling transactions.

The fraud detection server 120 stores the determined rate at which further transaction occur from the identified account 320 within the predetermined time period, the total amount in refunds received by the account 320 within the predetermined time period, the total amount in funds sent from the account 320 to any other account within the predetermined time period, and the calculated ***'cmp mmc g5'*** feature as transaction data 330 in database 130.

The fraud detection server 120 then inputs the transaction data 330 into the fraud risk score model 125. The fraud risk score model 125 generates a fraud risk score 340 based on the inputted transaction data 330. If the risk score 340 is above a predetermined threshold, the fraud detection server 120 determines that the account 320 is fraudulent and associated with fraudulent activity, as shown by option 350 in Figure 3. The predetermined threshold for the risk score 340 may be a score between 0-1000 or any other threshold determined by the fraud detection server 120.

In this case, the fraud detection server 120 proceeds to send an alert 380 to a user device 370 that account 320 is fraudulent. The user device 370 may be a device associated with a financial institution that maintains the fraudulent account 320, a device associated with the payment network 100 and the payment network provider, or any other device which is to receive alerts of fraudulent accounts.

If the fraud risk score 340 is below the predetermined threshold, the fraud detection server 120 determines that the account 320 is not associated with fraudulent activity, as shown in option 360 in Figure 3, and does not send an alert.

The fraud detection server 120 stores the generated risk score 340, with details of the account 320, in the database 130. The fraud detection server 120 also stores a reason code with the generated risk score 340 in the database 130, such as the fraudulent risk reason code indicting that the account has made a high-risk transaction.

The fraud detection server 120 further repeats the above process and calculations, determining new features for input into the fraud risk score model 125 relating to the transactional activity of the account 320 over an extended period of time. For example, the fraud detection server 120 may monitor the account 320 over a period of 12 weeks, and calculate a plurality of features based on the account's activity. The fraud detection server 120 inputs each calculated feature into the fraud risk score model 125 to generate a plurality of different risk scores over the extended period of time, such as the 12 weeks. If a generated risk score is above the predetermined threshold, the fraud detection server 120 sends an alert 350 to the user device 370.

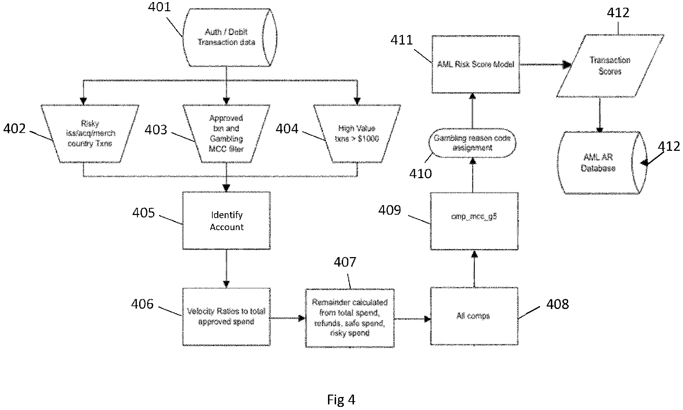

Figure 4 shows a sequence flow diagram of a method performed by the fraud detection server 120 of Figures 2 and 3, to detect whether an account associated is associated with fraudulent activity.

A step 401, the fraud detection server 120 receives transaction data from the payment network 100, such as transaction data 210 shown in Figure 2. The transaction data reived at step 401 includes details of a plurality of transactions, such as the transactions 211 shown in Figure 2, that have occurred across the payment network 110.

At step 402, the fraud detection server 120 determines which of the plurality of transactions received at step 401 were occurred at either an issuer financial institution 140 or acquirer financial institution 150 in a location considered by the payment network provider to be high-risk.

At step 403, the fraud detection server 120 determines which of the plurality of transactions received at step 401 are associated with one of the predetermined authorisation response codes and one of the set of specific MCCs determined to be at risk of being associated with fraud.

At step 404, the fraud detection server 120 determines which of the plurality of transactions received at step 401 are above a predetermined value, for example, transactions that are over $1000.

The fraud detection server 120 then determines one or more of the plurality of transactions that comply with all of the above conditions, i.e., one or more transactions that are made at a high-risk location, associated with a specific MCC, has a predetermined authorisation response code and relates to a value over a predetermined amount.

By way of example, the following description and steps 406-411 will be described in relation to a single identified high-risk transaction that satisfies the above conditions. However, the method shown in Figure 4 may be performed with any number of high-risk transactions that are identified by the fraud detection server as satisfying the above conditions.

At step 405, the fraud detection server 120 determines a source account associated with the identified high-risk transaction.

At step 406, the fraud detection server 120 determines the rate at which further high-risk transaction occur from the identified account 320 within a predetermined time period, the total amount in refunds received by the account 320 within the predetermined time period and the total amount in funds sent from the account 320. The fraud detection server 120 also calculates a ratio of the rate of further high-risk transactions occurring from the identified account compared to the rate of any further transaction occurring from the account (as described in relation to Figure 3).

At step 407, the fraud detection server 120 determines the **'56*d ratio', 'risk_{usd}*', '*safe_{usd}*', *'refund'*** and ***'usd'*** features, and calculates the ***'remainder'*** feature, as described above in relation to Figure 3.

At step 408, the fraud detection server 120 calculates the ***'all comps'*** feature, as described above in relation to Figure 3.

At step 409, the fraud detection server 120 calculates the ***'cmp mmc g5'*** feature, as described above in relation to Figure 3.

At step 410, the fraud detection server 120 assigns a reason code to the calculated ***'cmp mmc g5'*** feature, such as the high-risk transaction reason code described above in relation to Figure 3.

At step 411, the fraud detection server 120 inputs the determined rate at which further high-risk transaction occur from the identified account 320 within the predetermined time period, the total amount in refunds received by the account 320 within the predetermined time period, the total amount in funds sent from the account 320 within the predetermined time period and the '***cmp mmc g5'*** feature, into the fraud risk score model 125 (denoted as "AML Risk Score Model' in Figure 4).

At step 412, the fraud risk score model 125 generates a fraud risk score based on the inputted feature for the identified account. At step 513, the generated risk score is stored in the database 130, in association with the details of the account.

If the risk score 340 is above a predetermined threshold, the fraud detection server 120 determines that the account 320 is fraudulent and associated with fraudulent activity and sends an alert to a user device that account 320 is fraudulent. If the fraud risk score 340 is below the predetermined threshold, the fraud detection server 120 determines that the account 320 is not associated with fraudulent activity and does not send an alert.

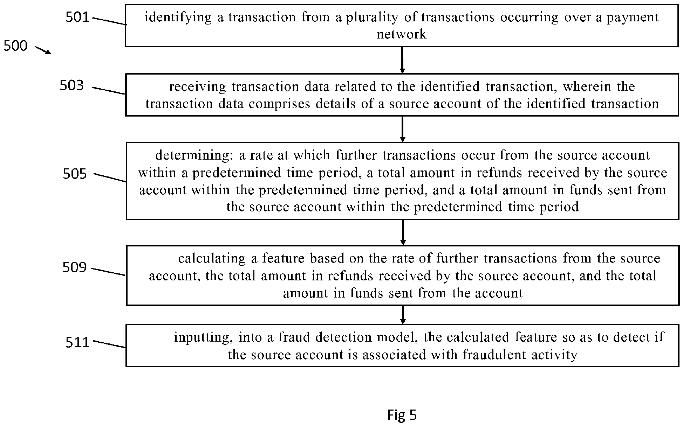

Figure 5 shows a flow diagram of a computer implemented method 500 for determining if a merchant account is associated with fraudulent activity.

At step 501 the method involves, identifying a transaction from a plurality of transactions occurring over a payment network.

At step 503 the method involves, receiving transaction data related to the identified transaction, wherein the transaction data comprises details of a source account of the identified transaction.

At step 505 the method involves, determining: a rate at which further transactions occur from the source account within a predetermined time period, a total amount in refunds received by the source account within the predetermined time period, and a total amount in funds sent from the source account within the predetermined time period.

At step 507 the method involves, calculating a feature based on the rate of further transactions from the source account, the total amount in refunds received by the source account, and the total amount in funds sent from the account.

At step 509 the method involves, inputting, into a fraud detection model, the calculated feature so as to detect if the source account is associated with fraudulent activity.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

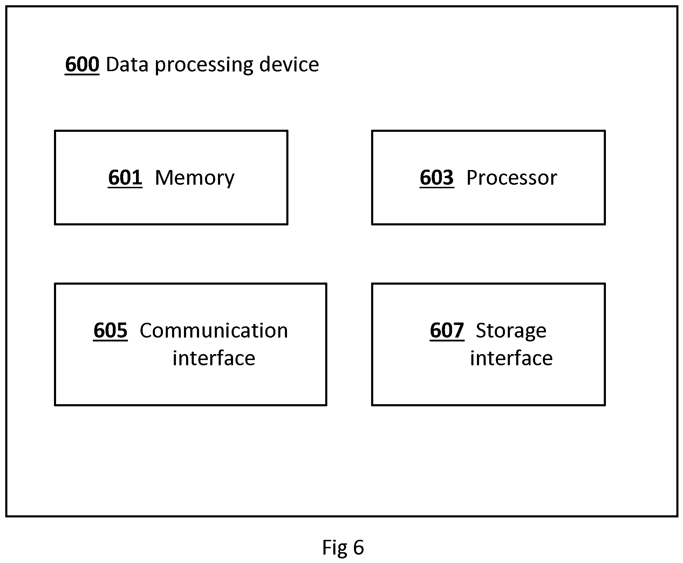

Similarly, any steps of any of the methods described herein may be performed by data processing devices. By way of example, Figure 6 shows, in schematic form, a data processing device 600 that is suitable for performing the functions of the servers of the payment network 110, the fraud detection server 120, or any other entity. The data processing device 600 may automatically perform any of the methods described herein.

Data processing device 600 includes a processor 603 for executing instructions. Instructions may be stored in a memory 601. Processor 603 may include one or more processing units (e.g., in a multi-core configuration) for executing instructions. The instructions may be executed within a variety of different operating systems on the data processing device 600, such as UNIX, LINUX, Microsoft Windows^{®}, etc. More specifically, the instructions may cause various data manipulations on data stored in memory 601 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 603 is operatively coupled to a communication interface 605 such that data processing device 600 can communicate with a remote device, such as another data processing device of the system. For example, communication interface 605 may receive communications from another member of the system.

Processor 603 may also be communicatively coupled to a storage device such as a database, depending on the function of data processing device 600 within the context of the system. The storage device is any computer-operated hardware suitable for storing and/or retrieving data, where in the case of a secure storage medium the data is stored and retrieved securely.

The storage database may, for example, include the database 130, and it can be external to data processing device 600 and located remotely. Alternatively, it can be integrated in data processing device 600. For example, data processing device 600 may include memory 601 as one or more hard disk drives acting as a storage database. Alternatively, where the storage database is external to data processing device 600, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 603 can be operatively coupled to the storage device (storage database) via a storage interface 607. Storage interface 607 is any component capable of providing processor 603 with access to the storage device. Storage interface 607 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 603 with access to the storage device.

Memory 601 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although it is described that the fraud detection server 120 is maintained by the same payment network provider that maintains the payment network 110, in other arrangements the fraud detection server 120 may be maintained by a different entity to the payment network 110. In this alternative arrangement, the fraud detection server 120 may have been given access to receive transaction data obtained by the payment network provider from the payment network 110.

Although it is shown in Figure 1 that the fraud detection server 150 is only in communication with the payment network 110, in other arrangements the fraud detection server 120 may be in direct communication with each or one of the issuer and acquirer financial institutions 140, 150.

The fraud risk score model 125 is configured to detect the fraudulent activities of money laundering. However, the fraud risk score model 125 may be used to detect any type of fraud, such as network security fraud. Therefore, a fraud detected by the fraud detection server 120 may be a fraud of money laundering, fraudulent activity and/or a network security fraud.

The specific MCCs used by the fraud detection server 120 that are at risk of fraudulent activity are '6211', '7801' and '7995'. However, any set MCCs may be determined by the fraud detection server 120 as being at risk of being associated with fraudulent activity, and as such used to filter through the received transaction data from the payment network.

By way of example, Figure 2 shows data 210 relating to transactions 211 (denoted as transactions 1 to 6). However, it is to be understood that the data 210 received by the fraud detection server may comprise data relating to any number of transactions.

Although it is described that the fraud risk score model 125 is machine learning model, such as a random forest model, the machine learning model may be any type of machine learning model such as a clustering machine learning model, a semi-supervised label propagation algorithm, a supervised machine learning model or an anomaly detection algorithm.

Although it is described in relation to Figure 3, that the set time period for calculating a rate of further high-risk transaction occurring from the account 320 and a rate of all transactions occurring from the account 320 is 56 days, any set time period may be used by the fraud detection server 120, such as 25 days, 50 days and 100 days for example.

As shown in Figure 3 and described above, all of the data determined by the fraud detection server 120 relating to the account 320 is included into the transaction data 330 and input into the fraud risk score model 125. However, it is to be understood that any combination of the determined features mentioned above may be included into transaction data 320 and used as input into the fraud risk score model 125. For example, only the a ***'cmp mmc g5'*** feature may be input into the fraud risk score model 125. Each of the determined features may also be individually labelled and input as separate features into the fraud risk score model 125. It is to also be understood that any of the features calculated by the equations described in relation to Figure 3 may be input into the fraud risk score model 125 as separate individual features, as well as the ***'cmp mmc g5*'** feature which combines all of the individually calculated features. In the case where multiple separate features are input into the fraud risk score model 125, the fraud risk score model 125 generates a risk score for each inputted feature, where each of the risk scores indicate the likelihood that the account 320 is associated with fraudulent activity.

As described in relation to Figure 4, the identified transaction (in which the account is identified from) must satisfy all of the conditions applied by the fraud detection server 120 at steps 402-404. However, in alternative arrangements, the identified transaction may be identified by only satisfying one of the three conditions, such as being a transaction made at a high-risk location, and not a transaction associated with a set MCC or having a value over a certain amount. As another example, the transaction identified may be a transaction associated with a specific set MCC and with a predetermined authorisation response code, but was not made at a high-risk location or was not of a value above the predetermined value.

## Claims

1. A computer implemented method for detecting fraud using a fraud detection model, the method comprising:
identifying a transaction from a plurality of transactions occurring over a payment network;
receiving transaction data related to the identified transaction, wherein the transaction data comprises details of a source account of the identified transaction;
determining: a rate at which further transactions occur from the source account within a predetermined time period, a total amount in refunds received by the source account within the predetermined time period, and a total amount in funds sent from the source account within the predetermined time period;
calculating a feature based on the rate of further transactions from the source account, the total amount in refunds received by the source account, and the total amount in funds sent from the account; and
inputting, into a fraud detection model, the calculated feature so as to detect if the source account is associated with fraudulent activity.

2. The method according to claim 1, wherein the step of identifying the transaction from the plurality of transactions comprises:
identifying a transaction from the plurality of transactions that occurred at a merchant with a specific merchant category code (MCC), wherein the specific MCC relates to a category of merchants determined by the payment network to be at risk of being associated with fraudulent activity.

3. The method according to any preceding claim, wherein the step of identifying the transaction from the plurality of transactions comprises:
identifying a transaction from the plurality of transactions that is associated with a predetermined authorization response code received by an acquirer financial institution associated with said transaction from an issuing bank associated with said transaction.

4. The method according to any preceding claim, the method further comprising:
determining a total number of safe transactions which occur from the source account within the predetermined time period, wherein the safe transactions comprise transaction occurring between the source account and a merchant associated with a merchant category code (MCC) determined by the payment network not to be at risk of fraudulent activity;
calculating a further feature based on the total number of safe transactions; and
inputting, into the fraud detection model, the calculated further feature so as to detect if the source account is associated with fraudulent activity.

5. The method according to any preceding claim, the method further comprising:
determining a total amount in funds sent from the source account to a merchant account within the predetermined time period, wherein a merchant associated with the merchant account is of a specific category determined by the payment network to be at risk of being associated with fraudulent activity;
calculating a further feature based on the total amount in funds sent from the source account to the merchant account at risk of being associated with fraudulent activity; and
inputting, into the fraud detection model, the calculated further feature to detect if the source account is associated with fraudulent activity.

6. The method according to claim 4 and 5, wherein the further feature based on the total number of safe transactions is a first further feature, the further feature based on the total amount in funds sent from the source account to the merchant account is a second further feature, and wherein the method further comprises:
calculating a third further feature based on:
the rate of further transactions from the source account;
the total amount in refunds received by the source account;
the total amount in funds sent from the source account;
the total number of safe transactions; and
the total amount in funds sent from the source account to the merchant account at risk of being associated with fraudulent activity; and
inputting, into the fraud detection model, the third further feature so as to detect if the source account is associated with fraudulent activity.

7. The method according to any preceding claim, the method further comprising:
determining a total number of cross-border transactions which occur from the source account within the predetermined time period;
calculating a further feature based on the total number of cross-border transactions; and
inputting, into the fraud detection model, the calculated further feature to detect if the source account is associated with fraudulent activity.

8. The method according to any preceding claim, wherein the fraud detection model is a random forest machine learning model.

9. The method according to any claim 2, wherein the specific MCC is a gambling MCC.

10. The method according to any preceding claim, the method further comprising:
generating, by the fraud detection model after input of the calculated feature, an output, wherein the output indicates a likelihood that the source account is associated with fraudulent activity.

11. The method according to claim 10, wherein the output is a fraud risk score that indicates the likelihood that the source account is associated with fraudulent activity

12. The method according to claim 11, the method further comprising:
determining if the fraud risk score is above a predetermined threshold; and
if the fraud risk score is above the predetermined threshold, sending, to a device, an alert indicating that the source account is associated with fraudulent activity.

13. A device for determining if a merchant account is associated with fraudulent activity, the device comprising a processor and a memory, the memory comprising instructions which, when executed, cause the processor to perform the method of claim 1 or any claim dependent thereon.

14. A non-transitory computer-readable medium comprising instructions which, when executed by a computer, cause the computer to carry out the method of claim 1 or any claim dependent thereon.

15. A computer program product comprising instructions which, when the program is executed by a computer, cause the computer to carry out the method of claim 1 or any claim dependent thereon.
